# EUROPEAN PATENT APPLICATION

(11) **EP 2 562 393 A2**
(43) Date of publication of application: **27.02.2013**
(21) Application number: 12180320.9
(22) Date of filing: 13.08.2012
(51) Int. Cl.: F02C 7/143

(54) **Variable temperature chiller coils**

(30) Priority: 23.08.2011 US 201113215583
(71) Applicant: General Electric Company, Schenectady, NY 12345 (US)
(72) Inventor: Desai, Bhalchandra Arun, Atlanta, GA Georgia 20339 (US); Sullivan, Michael Adelbert, Atlanta, GA Georgia 30339 (US); Vu, Huong Van, South Norcross, GA Georgia 30092 (US); Lafontaine, Eric Milton, Atlanta, GA Georgia 30339 (US); Cournoyer, Mark Andrew, Coventry, RI Rhode Island 02816-7312 (US)
(74) Representative: Cleary, Fidelma

(57) **Abstract**

A chiller coil system for an asymmetric gas turbine filter house (10) includes a plurality of chiller coil modules (22) arranged in a substantially vertical array, each chiller coil module provided with a cooled fluid inlet pipe (42-52) and a fluid outlet pipe (54,64). Each outlet pipe (54-64) is connected to a common return pipe (39) and at least some of the inlet pipes (42,52) are connected to the common return pipe (39). A mixing control valve (74,76,82,84) is provided for controlling an amount of cooling fluid in the common return pipe (39) to be added to at least some of the inlet pipes (42-52).

## Description

### BACKGROUND

The present application relates generally to gas turbines and more particularly, to a chiller coil arrangement in a gas turbine inlet filter house.

### BACKGROUND OF THE INVENTION

Gas turbine engines typically include a compressor for compressing incoming air, a combustor for mixing fuel with the compressed air and to ignite the fuel and the air to form a high temperature gas stream, and a turbine section that is driven by the high temperature gas stream. It is generally accepted that lowering the temperature of the inlet air entering the compressor results in an increased power output, and there are known methods for reducing the air inlet temperature to the engine in so-called power augmentation systems. A power augmentation system may include a chiller coil arrangement located in the turbine inlet filter house that reduces the temperature of the inlet air stream. Examples are described in, for example, U.S. Pat. No. 7,007,484 B2 and U.S. Patent Publication No. 2005/0056023 A1.

It has been determined that for gas turbine filter houses with asymmetric geometry, however, the inlet air temperature profile in the duct downstream of the chiller coil is not uniform because of the variable velocity of the inlet air flowing over the coils at different heights within the filter house. Resulting non-uniform air temperature distribution cause undesirable stress on the compressor components.

There is a need, therefore, for a chiller coil system that provides substantially uniform inlet air temperature even when installed in asymmetrical gas turbine inlet filter houses.

### BRIEF SUMMARY OF THE INVENTION

Accordingly, in one aspect, the present invention relates to a chiller coil system for an asymmetric gas turbine filter house comprising a plurality of chiller coil modules arranged in a substantially vertical array, each chiller coil module provided with a cooled fluid inlet pipe and a fluid outlet, each outlet pipe connected to a common return pipe, wherein at least some of the inlet pipes is connected to the common return pipe; and mixing control valves for controlling an amount of cooling fluid in the common return pipe to be added to the at least some of the inlet pipes.

Each chiller coil module may be provided with a cooled fluid inlet pipe and a warmed fluid outlet pipe, each warmed fluid outlet pipe connected to the common return pipe, wherein at least some of the cooled fluid inlet pipes are connected to the common return pipe, and wherein a mixing control valve controls an amount of warmed fluid in the common return pipe to be added to the at least some of said inlet pipes.

In still another aspect, the invention provides a method of controlling temperature of inlet air flowing across a chiller coil assembly of a gas turbine, wherein the chiller coil assembly comprises a plurality of substantially vertically aligned chiller modules and wherein inlet air flow velocity varies across the chiller modules as a function of vertical height of the chiller modules, the method comprising determining temperature differential of the inlet air downstream of each module, and differentially adjusting temperature of cooling fluid in the plurality of chiller modules to produce a substantially uniform temperature for the inlet air downstream of the chiller coil assembly.

The invention will now be described in greater detail in connection with the drawings identified below.

### BRIEF DESCRIPTION OF THE DRAWINGS

Embodiments of the present invention will now be described, by way of example only, with reference to the accompanying drawings in which:
Fig. 1 is a partial schematic of an asymmetric gas turbine inlet filter house;
Fig. 2 is a schematic diagram of a chiller coil and control arrangement for the filter house shown in Figure 1; and
Fig. 3 is a schematic control block diagram for controlling the chiller coil arrangement shown in Figure 2.

### DETAILED DESCRIPTION OF THE INVENTION

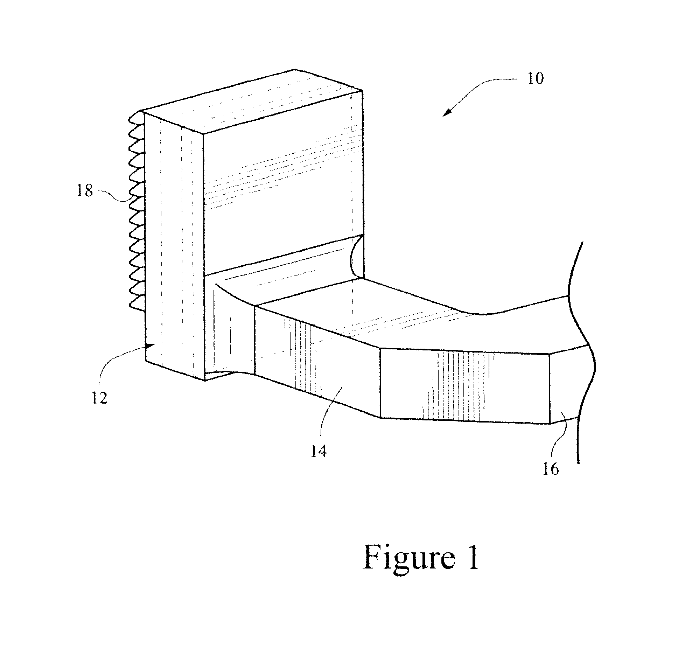

Fig. 1 illustrates a typical asymmetrical gas turbine filter house 10 including a filter section and chiller coil housing portion 12 and outlet duct portions 14, 16 leading to the compressor (not shown). A louvered inlet 18 guides outside or ambient air into the filter house, and it can be appreciated that the inlet flow velocity profile varies with height within the upstanding filter and chiller coil housing portion 12. Note the chiller coil shown in dashed pipes is arranged substantially vertically (and upstream or downstream of filter elements (not shown)), and that air velocity and hence the temperature across and about the chiller coil will also vary by height in that, for example, air entering at the top of the filter housing, across the coils 20 (described below) and down the back wall to the outlet duct 14 will have a lower velocity and thus a greater time exposure to the cooling coils than air entering the filter house at the bottom of the chiller unit where the velocity is greater. This means that air downstream of the chiller coils in the lower portion of duct sections 14, 16 will have higher temperatures than air in the upper portion of the duct sections. The exemplary but nonlimiting embodiment of the invention described herein seeks to make that inlet air temperature more uniform throughout the post coil vertical section 12, the duct sections 14 and 16 and hence the compressor.

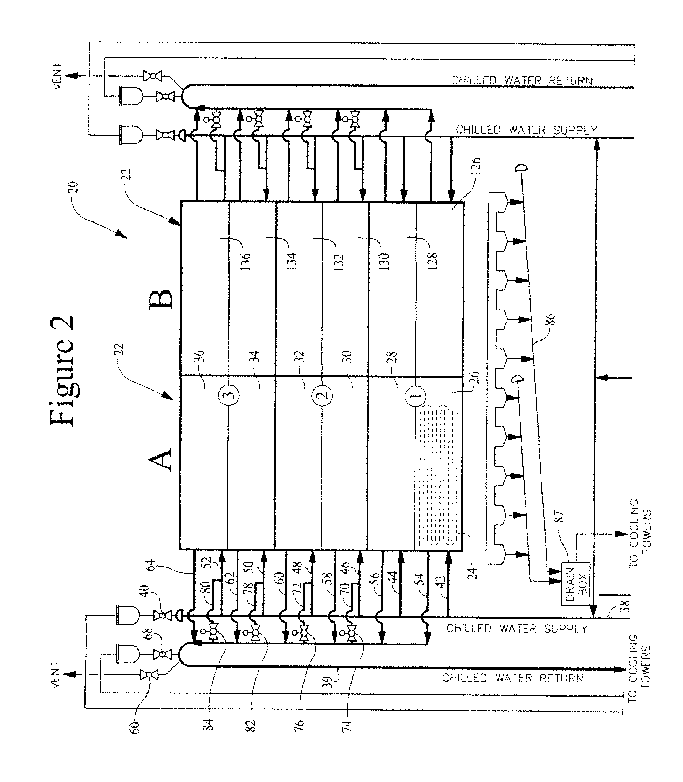

With reference to Fig. 2, the chiller coil assembly 20 is comprised of plural, individual but substantially identical vertically-oriented stacks of chiller coil modules 22, each of which supports a serpentine array of finned heat exchange tubes indicated generally at 24. In the exemplary but nonlimiting embodiment, the stacks of chiller coil modules 22 are divided into two side-by-side groups, Group A on the left-hand side and Group B on the right-hand side. Within each group, there are three sets 1, 2 and 3 of two coils each. Thus, within the Group A stack, modules 26 and 28 form the first set 1; modules 30 and 32 form the second set 2; and modules 34, 36 form the third set 3.

The module arrangement and control valve arrangement for the Group B stack is substantially identical to that of Group A, and therefore, only Group A will be described in detail, except as otherwise noted.

Chilled water (or other suitable cooling fluid) is supplied to the Group A stack of modules via common supply pipe 38. Each module is supplied individually by respective branch pipes 42, 44, 46, 48, 50 and 52. The cooling water exiting the modules via respective return branch pipes 54, 56, 58, 60, 62 and 64 joins to a common return pipe 39 which returns the newly-"warmed" water (due to heat exchange with the inlet air flowing across the module coils) to cooling towers (not shown) which ultimately return chilled water to the supply pipe 38. A separate manual vent valve 60 relieves pressure in the system as necessary. Vent valves 40 and 68 are for automatic vents and are in a normally open position.

Due to the asymmetric nature of the filter house construction, inlet air velocity over the chiller coils varies by location. As already noted above, it has been determined that for some asymmetric filter house configurations, the air velocity through the two lowermost modules 26, 28 of the Group A stack (and laterally-aligned modules 126, 128 of the Group B stack) is higher, thereby resulting in air flow that is warmer due to a shorter residence time in the coil section. Conversely, with decreased velocity across the two uppermost, modules 34, 36, (and laterally-aligned modules 134, 136 of the Group B stack) the inlet air downstream of the chiller coils is cooler due to longer residence time in the coil section. The inlet air temperature through the mid portion of the chiller coils, including modules 30, 32 and 130, 132, lies in between the temperature of the inlet air passing through the upper and lower sets of modules 36, 34 and 28, 26, respectively.

It will be appreciated that on smaller size inlet sections, only one vertical stack of modules can be utilized.

In order to achieve a substantially uniform inlet air temperature profile downstream of the chiller coils, the chiller supply/return configuration is modified in accordance with a first exemplary but nonlimiting embodiment described below.

With continuing reference to Fig. 2, for the mid and upper-height module sets 30, 32 (130, 132) and 34, 36 (134, 136), the chilled water supply is mixed with warmed return water. Specifically, as to the Group A stack, the branch inlet pipes 46, 48 of the mid-height modules 30 and 32 are connected by pipes 70 and 72 to the common return pipe 39 under the control of respective valves 74 and 76 which control the amount of warmed or return water to be added to the branch inlet pipes 46, 48.

Similarly, for the upper-height modules 34 and 36 of the Group A stack, the branch inlet pipes 50, 52 are connected by pipes 78 and 80 to the common return pipe 39 under the control of respective valves 82 and 84 which control the amount of warmed or return water to be added to the branch inlet pipes 50, 52.

The goal is to have coldest water temperature flowing through the lowest module sets 26 and 28 and relatively less colder water through sets 30 and 32 and relatively least cold water through sets 34 and 36. In other words, the water temperature profile through the chiller coil modules 22 is counteracting the velocity profile. In the highest velocity area (lowest height section), residence time is lowest and water temperature is coldest. Progressing towards the top of the stacks of chiller coil modules 22, the velocity is the lowest, resulting residence time is highest and the water temperature is least cold. This evens out the overall air temperature profile across the height of the stacks of modules 22. In other words, in the described system thermal stratification is achieved to counter the effects of variable velocity.

In the exemplary but nonlimiting embodiment, the controlled addition of warmed return water is substantially the same for mid-height modules 30 and 32, and a proportionately greater addition of warmed return water is made with respect to the upper-height modules 34 and 36. It is nevertheless possible to treat each module individually rather than in pairs.

A conventional drain trough 86 catches condensate formed on the outside of the various modules and routes it to a drain box 87. From the drain box, condensed water returns to the cooling towers where it is cooled and recycled to the chiller coils. Alternatively, the condensate can be drained off at the nearest drain point. Both alternatives are practiced in the industry.

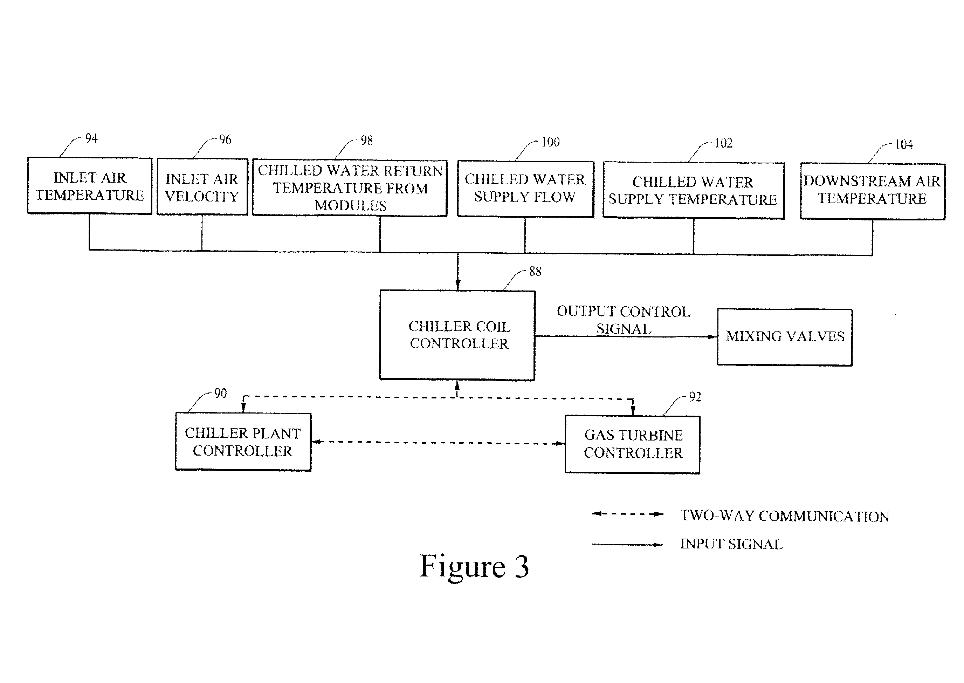

Turning to Fig. 3, an exemplary but nonlimiting control system for monitoring and adjusting the water supplied to the various modules is illustrated.

A chiller coil controller 88 interfaces with a chiller plant controller 90 and a gas turbine controller 92. The chiller coil controller receives signals from sensors/thermocouples 94, 96, 98, 100, 102 and 104, respectively corresponding to: inlet air temperature, inlet air velocity, chilled water return temperature from module pairs, chilled water supply flow, chilled water supply temperature, downstream air temperature. Another embodiment of this system can also be utilized where the chiller coil controller resides in the chiller plant controller.

With these inputs, and with the assistance of control logic that is well within the skill of the art, the chiller coil controller 88 outputs control signals the various mixing valves 74, 76, 82, 84 to achieve the desired coolant temperature profile. In this way, the chiller coil system is regulated to achieve a substantially uniform air temperature downstream of the chiller coils, thus compensating for the different velocity profiles across the coils resulting from the asymmetric filter house geometry.

It is within the scope of this invention to achieve substantial uniformity of inlet air temperature downstream of the coils by other methods as well. For example, the fin density, material of construction, coatings or the geometry of the individual heat exchanger tubes and fins in the various coils, and/or the heat exchange properties or mass flow of the cooling fluid may be altered as needed to obtain the desired uniformity of inlet air temperature.

The chilling coil system as described herein can be employed on essentially all existing gas turbines where transitions are asymmetric or where velocity profile is not uniform, and where the power demands warrant inlet air cooling. It can be also employed on new units where asymmetric transitions are necessary (to save cost of structural steel) when specified along the inlet air cooling.

The chilling coil system as described herein can also be employed on applications requiring inlet air heating for gas turbines where transitions are asymmetric and the gas turbine operation warrants inlet air heating. The principle of design and operation is similar to the system explained above except for the fact that the purpose is to heat the inlet air.

The chiller coil system can also be used in circumstances where the plurality of chiller modules are supplied with coolant at different temperatures from a cooling source. In this arrangement mixing valves and return water mixing are not used; however, all modules are independently supplied with coolant at different temperatures directly from the cooling source.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A chiller coil system for an asymmetric gas turbine filter house (10) comprising:
a plurality of chiller coil modules (22) arranged in at least one substantially vertical array, each chiller coil module (22) provided with a fluid inlet pipe (42-52) connected to a common supply pipe (38) and a fluid outlet pipe (54-64) connected to common return pipe (39); wherein at least some of said inlet pipes (42-52) are connected to said common return pipe (39); and
mixing control valves (74,76,82,84) for controlling an amount of fluid in said common return pipe (39) to be added to at least some of said fluid inlet pipes (42-52).

2. The chiller coil system of claim 1, wherein said plurality of chiller modules (22) comprise two vertically-aligned, side-by-side groups of modules.

3. The chiller coil system of claim 2, wherein modules in each of said side-by-side groups of modules are divided into vertically adjacent pairs, and wherein one of said mixing control valves is provided for each vertically adjacent pair in each of said side-by-side groups

4. The chiller coil system of claim 2 or 3, wherein each of said side-by-side groups of modules comprise at least three sets of at least two modules each (26-36).

5. The chiller coil system of any of claims 1 to 4, wherein said mixing control valves (74,76,82,84) are controlled by a chiller coil controller (88).

6. The chiller coil system of claim 5, wherein said chiller coil controller (88) receives plural inputs including but not limited to inlet air temperature, inlet air velocity, cooled fluid water supply flow rate, cooled fluid water supply temperature, return fluid temperature, and downstream air temperature.

7. The chiller coil system of claim 5 or 6, wherein said chiller coil controller (88) adjusts temperature and flow rate of cooling fluid entering said at least some of said inlet pipes (42-52) to thereby enable air flowing across said plurality of chiller coil modules (22) to have a substantially uniform downstream temperature.

8. The chiller coil system of any of claims 1 to 7, wherein said chiller coil system is mounted in a gas turbine filter house inlet upstream or downstream of inlet filter elements supported within the gas turbine filter house (10).

9. The chiller coil system of claim 5, wherein said at least some of said inlet pipes (42-52) comprise pipes supplying chilled water to middle (30,32) and upper ones (34,36) of said three-module sets.

10. The chiller coil system of any preceding claims, wherein each chiller coil module (22) is provided with a cooled fluid inlet pipe and a warmed fluid outlet pipe, each warmed fluid outlet pipe connected to the common return pipe; and wherein at least some of said cooled fluid inlet pipes are connected to said common return pipe (39), and wherein the mixing control valve (74,76,82,84) controls an amount of warmed fluid in said common return pipe (39) to be added to said at least some of said cooled fluid inlet pipes.

11. A method of controlling temperature of inlet air flowing across a chiller coil assembly (20) of a gas turbine, wherein the chiller coil assembly (20) comprises a plurality of substantially vertically aligned chiller modules (22) and wherein inlet air flow velocity varies across the chiller modules (22) as a function of vertical height of said chiller modules (22), the method comprising:
(a) determining temperature differential of the inlet air downstream of each module (22); and
(b) differentially adjusting temperature of cooling fluid in said plurality of chiller modules (22) to produce a substantially uniform temperature for the inlet air downstream of the chiller coil assembly (20).

12. The method of claim 11, wherein said plurality of substantially vertically aligned chiller coil modules (22) comprise a stack subdivided into at least three sets of chiller coil modules; and wherein step (b) includes differentially adjusting the temperature of the cooling fluid in two of said at least three sets.

13. The method of claim 11 or 12, wherein said two (30,32,34,36) of said at least three sets are stacked above a remaining one (26,28) of said at least three sets.

14. The method of any of claims 11 to 13, wherein each of said three sets comprises a pair of said chiller modules (22).

15. The method of claim 14 wherein said pair of said chiller modules (22) in each of said at least three sets of modules are adjusted in substantially the same manner.
